# EUROPEAN PATENT APPLICATION

(11) **EP 3 798 910 A1**
(43) Date of publication of application: **31.03.2021**
(21) Application number: 19912226.8
(22) Date of filing: 26.07.2019
(51) Int. Cl.: G06K 19/077, B42D 15/02, B42D 25/00, G06K 19/07, G06K 19/02, B32B 21/08, B32B 27/36

(54) **CARD INCLUDING WOODEN SHEET AND MANUFACTURING METHOD THEREFOR**

(71) Applicant: Kona I Co., Ltd., Gimpo-Si, Gyeonggi-do 10040 (KR)
(72) Inventor: SHIN, Sok Soo, Gyeonggi-do 10040 (KR); LEE, Jung Jae, Gyeonggi-do 10040 (KR)
(74) Representative: Viering, Jentschura & Partner mbB Patent- und Rechtsanwälte
(86) International application number: PCT/KR2019/009330
(87) International publication number: WO 2021/020596

(57) **Abstract**

A method of manufacturing a card according to an embodiment of the present invention includes the steps of: processing a wood sheet; stacking the wood sheet on an inlay sheet including an antenna that will be connected to a COB chip; milling an area corresponding to the chip on the wood sheet, and forming a residual layer of a thickness smaller than that of the wood sheet; exposing end portions of the antenna passing through the residual layer from the inlay sheet located under the residual layer of the wooden sheet; and electrically connecting the chip and the end portions of the antenna.

## Description

### TECHNICAL FIELD

The present invention relates to a card including a wood sheet and a method of manufacturing the same. More specifically, the present invention relates to a card including a wood sheet capable of a wired or wireless interface while feeling luxurious and elegant wood texture by embedding a wood sheet in the card, and a method of manufacturing the same.

### BACKGROUND ART

Generally, plastic cards can be used in place of cash, like credit cards, cash cards, and transportation cards. Cards embedded with integrated circuit chips capable of storing a large amount of information are used as medical treatment cards of hospitals, various membership cards or the like, and plastic cards of various purposes are widely used in the present.

A printing paper with a pattern, a character or like showing various colors through offset or silk-screen printing is used in a plastic card to decorate the exterior of the card and show various information.

However, when the appearance of a card is decorated through printing, an effect of enhancing the appearance of the card or feeling a high level of dignity by showing a unique texture cannot be expected.

Accordingly, in view of the problems as described above, cards including decorations of precious metal materials such as a metal, ceramic or the like in a sheet or heat-bonding or compressing the decorations have been proposed.

However, these metal piece decorations give a cold feeling by nature, and it is difficult to feel a soft texture or natural beauty.

To solve all these problems, wooden cards including wood such as solid wood or a decoration or a sheet of a textile material are proposed recently.

However, in the case of a wooden card, a process of manufacturing a sheet using solid wood, heat-pressing the sheet on a plastic card, and inserting a chip through milling is accompanied, and there is a problem in that it is difficult to process a uniform surface like a metal due to an irregular surface pattern shape such as a wood grain pattern or the like by the nature of a wood material, and accordingly, precise processing is very difficult, and productivity is very low.

Particularly, in the milling process, there are cases in which the wood sheet is blown in the form of powder such as scrapings or sawdust, and caught in a crack or piled in an unintended place.

In addition, as the internal space and moisture of the wood sheet are removed in a pressing and heating process, errors inevitably occur. Accordingly, as the wood sheet becomes thinner than an initially set thickness or is milled in a bent and modified state in the milling process, there is also a problem of milling to an unintended sheet layer or unbalanced milling.

As the problem like this occurs more seriously when combi cards capable of a wired or wireless interface are manufactured, imbalance of the wood sheet, presence of scrapings and sawdust of wood, modification and the like hinder a precise connection process between an antenna inlay layer and the chip and, particularly, often act as a factor of cutting the antenna wire itself.

### DISCLOSURE OF INVENTION

### TECHNICAL PROBLEM

Therefore, the present invention has been made in view of the above problems, and it is an object of the present invention to provide a method of more productively and efficiently manufacturing a wooden card capable of providing a warm, natural and luxurious texture of wood, and a card including a wood sheet, by using a structure and a processing method that can minimize the defect rate while precisely and easily processing a chip card that provides a wired or wireless interface.

In addition, another object of the present invention is to efficiently and productively provide an eco-friendly wooden card that is closer to nature and may protect users' health by accurately stacking and combining eco-friendly materials and wood sheets without being hindered by wood grain, modification or scrapings thereof.

### TECHNICAL SOLUTION

To accomplish the above objects, according to one aspect of the present inventions, there is provided a method of manufacturing a card, the method comprising the steps of: processing a wood sheet; stacking the wood sheet on an inlay sheet including an antenna that will be connected to a COB chip; milling an area corresponding to the chip on the wood sheet, and forming a residual layer of a thickness smaller than that of the wood sheet; exposing end portions of the antenna passing through the residual layer from the inlay sheet located under the residual layer of the wooden sheet; and electrically connecting the chip and the end portions of the antenna.

To accomplish the above objects, according to another aspect of the present inventions, there is provided a card comprising: a COB chip that provides a wired or wireless interface; a processed wood sheet; and an inlay sheet stacked under the wood sheet and including an antenna, wherein the top of the wood sheet includes a groove formed by milling an area corresponding to the chip, and the groove includes a residual layer of a depth smaller than the thickness of the wood sheet on the bottom thereof, and end portions of the antenna passing through the residual layer from the inlay sheet located under the residual layer of the wood sheet to be exposed are electrically connected to contact points of the chip.

### ADVANTAGEOUS EFFECTS

According to an embodiment of the present invention, an imprecise process due to wood grain and irregularity of wood generated by a residual layer may be complemented by forming the residual layer of a depth smaller than the thickness of a wood sheet while milling an area corresponding to a chip on the wood sheet, and exposing end portions of an antenna to pass through the residual layer from an inlay sheet located under the residual layer of the wood sheet.

In addition, as a groove through which the chip and the end portions of the antenna may be electrically connected is formed to pass through the residual layer without being greatly affected by modification, sawdust, scrapings or the like of wood, the present invention may provide a structure and a method of minimizing the defect rate while precisely and easily processing a wooden card equipped with a wired/wireless interface chip that supports contact and non-contact on a wood sheet.

Therefore, according to an embodiment of the present invention, there is provide a wood sheet card, which can be efficiently manufactured while providing a warm, natural and luxurious texture of wood, and a method of manufacturing the same, and particularly an eco-friendly wood sheet card that is closer to nature and even may protect users' health by accurately stacking and combining eco-friendly materials and wood sheets without being hindered by wood grain, modification or scrapings thereof.

### BRIEF DESCRIPTION OF THE DRAWINGS

FIG. 1 is a perspective view showing a wooden card according to an embodiment of the present invention.
FIG. 2 is a view showing a COB inserted in a wooden card and a connection between the contact point of the COB and an antenna according to an embodiment of the present invention.
FIG. 3 is a cross-sectional view showing a wooden card manufactured according to an embodiment of the present invention, and FIGS. 4 to 8 are enlarged views showing the portion of dotted line in FIG. 3, which are cross-sectional views of each process illustrating a method of manufacturing a wooden card according to an embodiment of the present invention.
FIGS. 9 to 14 are cross-sectional views of each process illustrating a method of manufacturing a wooden card according to another embodiment of the present invention.
FIG. 15 is a flowchart illustrating a method of manufacturing a wooden card according to an embodiment of the present invention.
FIGS. 16 to 18 are views illustrating a process of arranging and combining card sheets in a large area sheet for manufacturing a wooden card.

### DESCRIPTION OF SYMBOLS

100: Wooden card
110: Wood sheet layer
120: Antenna inlay layer
130: First printing layer
140: Second printing layer
150: First overlay layer
160: Second overlay layer
170: Core layer
115: COB chip receiving unit
125: Release screen layer
127: End portion of antenna
121, 122: Contact point connection unit of antenna
200: COB chip
210: Contact point of COB chip
220: Mold layer of COB chip
117: Residual layer

### BEST MODE FOR CARRYING OUT THE INVENTION

Hereinafter, only the principle of the present invention will be described. Therefore, those skilled in the art may implement the principle of the present invention that is not clearly described or shown in this specification and invent various apparatuses included within the concept and scope of the present invention. In addition, it should be understood that, in principle, all the conditional terms and embodiments arranged in this specification should be clearly intended only for the purpose understanding the concept of the present invention and are not restrictive to the embodiments and states specially arranged like this.

In addition, throughout the specification, when an element is "connected to" another element, it includes a case of "indirectly connecting" the elements with intervention of another element therebetween, as well as a case of "directly connecting" the elements. In addition, when an element includes a constitutional element, it means further including another constitutional element, not excluding another constitutional element, as far as an opposed description is not specially specified.

In addition, it should be understood that all the detailed descriptions arranging specific embodiments, as well as the principle, viewpoint and embodiments of the present invention, are intended to include structural and functional equivalents thereof. In addition, it should be understood that these equivalents include the equivalents that will be developed in the future, as well as the equivalents open to the public presently, i.e., all components invented to perform the same function regardless of the structure.

The objects, features and advantages described above will be further clear through the following detailed descriptions related to the accompanying drawings, and therefore, those skilled in the art may easily embody the spirit of the present invention. In addition, in describing the present invention, when it is determined that the detailed description of known techniques related to the present invention may unnecessarily blur the gist of the present invention, the detailed description will be omitted.

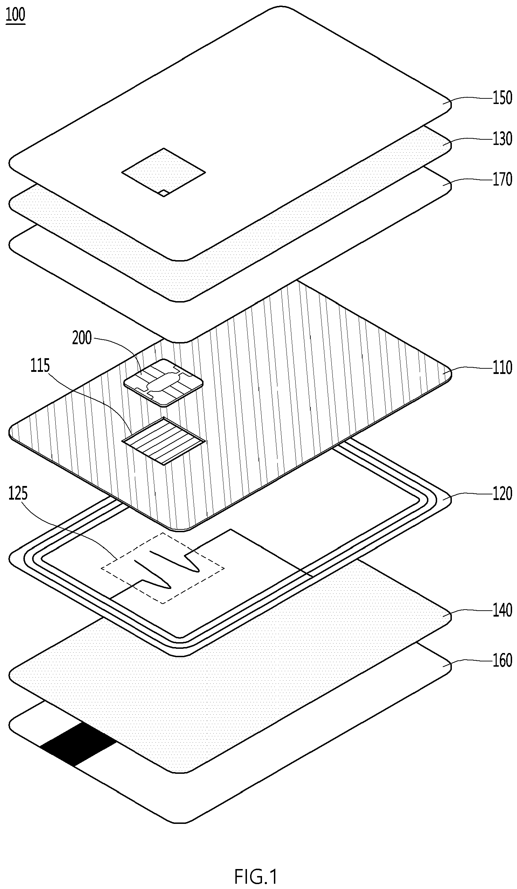

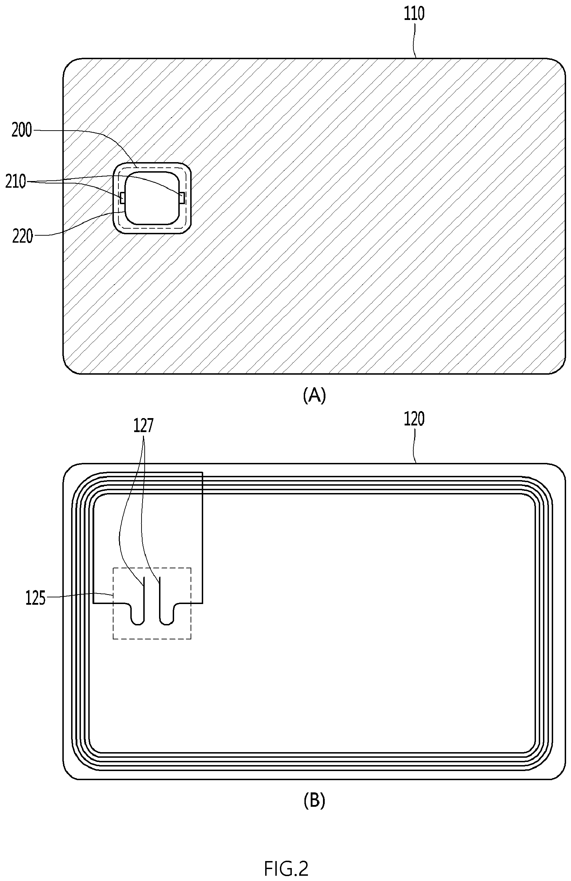

FIG. 1 is a perspective view showing a wooden card 100 including a wood sheet according to an embodiment of the present invention, and FIG. 2 is a view showing a COB chip 200 inserted in a wooden card and a connection between the contact point of the COB chip and an antenna according to an embodiment of the present invention.

As the wooden card 100 may include one or more sheets or layers and is capable of a wired and wireless interface, it can be used as a combi card by inserting a combi COB (Chip on board) chip 200 capable of contact and non-contact communication.

As an embodiment, the wooden card 100 includes a wood sheet layer 110, an antenna inlay layer 120 stacked under the wood sheet layer 110 and having an antenna coil inlaid on an inlay core sheet, a core layer 170, a first printing layer 130, and a first overlay layer 150 sequentially stacked on the wood sheet layer 110, and a second printing layer 140 and a second overlay layer 160 sequentially stacked under the antenna inlay layer 120.

Here, the second overlay layer 160 may be a magnetic stripe overlay layer (MS O/L) in which a magnetic strip is overlaid.

In addition, although only the components described above are shown in the drawings, the present invention is not limited thereto, and other components such as a coating layer, a hologram layer, an adhesive layer and the like for implementing a wooden card may be further added, and a display unit, a biological sensor unit and the like may be additionally included for additional functions.

In addition, the wooden card 100 of the present invention may be manufactured in a specified size and thickness according to a predefined standard, and the wooden card 100 may be implemented to combine the sheets by determining the size and thickness of each sheet in an optimal thickness suitable for operation, wired connection, wireless communication sensitivity and the like of the wooden card.

Furthermore, the sheets constituting the wooden card 100 of the present invention may be configured as a large sheet of a size including a plurality of cards to make mass production possible, rather than as a sheet for making one card.

In addition, first, the wood sheet layer 110 is a core sheet that generates a feeling of material, wood grain, surface texture, and natural beauty unique to the wood card according to an embodiment of the present invention, and may be formed of a solid wood material.

A wood material constituting the wood sheet layer 110 may be formed by cutting solid wood logged in the nature into a predetermined size and processing a square wood bar of a rectangular parallelepiped shape while expressing the characteristics of wood. In addition, when the wood tissues are softened and sterilized by steaming and boiling the square wood bar, the cutting work may be easy. In addition, preferably, the process may be facilitated by drying the boiled wood to have a moisture content of 20 to 25%.

For example, the wood sheet layer 110 may be shaped in a solid wood sheet having a thickness of 0.1 to 0.8mm by thinly cutting a dried square wood bar using a wide blade, and cutting of the square wood bar may be made in a slicing method. The stress applied to the wood grain may be reduced and a wood pattern showing well the straight wood grain may be formed by cutting the square wood bar at a right angle with respect to tree rings.

In addition, although a synthetic resin emulsion woodworking adhesive, which is a non-toxic and eco-friendly material, may be used as a water-based adhesive for stacking wood sheets and attaching upper and lower layers according to an embodiment of the present invention, since various different types of adhesives may be used, the present invention is not limited to the type of water-based adhesive. In addition, as the upper and lower sheet layers 120, 130, 140, 150, 160 and 170 are laminated by heating and pressing overall after the water-based adhesive is cured, a wooden card body including solid wood can be manufactured first.

Meanwhile, referring to FIG. 2, the antenna inlay layer 120 according to an embodiment of the present invention may be manufactured by forming an antenna coil on an inlay layer made of a synthetic resin material, and the antenna coil may be wired on the inlay layer by thermal bonding. For example, the antenna coil may be wired while heating a copper wire on the inlay layer using a high frequency bonding device.

Accordingly, the antenna inlay layer 120 may be a sheet including a radio frequency (RF) antenna coil, and the number of turns of the antenna coil may be determined to show optimized sensitivity through an RF communication (e.g., NFC, RFID) sensitivity test. In addition, the antenna coil of the present invention may be implemented to be directly connected to the chip-on-board (COB) chip 200 attached on the wood sheet layer 110 through a receiving groove 115.

To this end, the end portions 127 of the antenna coil may be connected to the contact points 210 of the COB chip 200. FIG. 2(A) shows the internal structure excluding the upper pad portion of the COB chip 200 accommodated in the wood sheet layer 110, in which a mold layer 220 supporting the upper pad and one or more contact points 210 for electrical connection may be provided under the COB chip 200, and one or more end portions 127 of the antenna coil may be electrically connected to the contact points 210, respectively.

Here, in the wooden card according to an embodiment of the present invention, while all the sheets are combined together and form one card body as the wood sheet layer 110 is laminated on the antenna inlay sheet 120 and the core layer 170 supporting and forming the overall shape of the card is laminated on the antenna inlay sheet 120, the COB receiving groove 115 may be formed on the wood sheet layer 110 by milling an area corresponding to the chip 200 (e.g., CNC machining for forming a chip insertion space). In addition, the receiving groove 115 may be processed to form a residual layer of a depth smaller than the thickness of the wood sheet layer 110 without penetrating the wood sheet layer 110.

When the COB chip receiving groove 115 is processed on the wood sheet, the residual layer may function as a protection layer for preventing various errors generated by the surface texture, wood grain, and residual substances. Particularly, the residual layer may also perform a function of protecting the antenna wire of the antenna inlay layer 120 not to be cut when the wood sheet is milled at an excessive depth.

This feature may be a more necessary configuration as the wood sheet layer 110 according to an embodiment of the present invention is stacked on the antenna inlay layer 120. Since the wood sheet layer 110 visually covers the antenna inlay layer 120 seeing from the front side, a more natural and elegant wooden card may be provided. Contrarily, when the wood sheet layer 110 is positioned under the antenna inlay layer 120, the antenna is seen to be exposed on the wood sheet seeing from the front side, and thus it may be felt as being visually disturbed.

In addition, the antenna inlay layer 120 may further include a release screen layer 125 for protecting the end portions 127 of the antenna wire located under the lower residual layer when the receiving groove 115 is formed. The wood sheet layer 110 may basically have ups and downs on part or all of the surface due to the wood grain, and although a residual layer is left when the receiving groove 115 is processed, the antenna wire of the antenna inlay layer 120 is cut in some cases due to milling errors or scrapings and adhesiveness.

Accordingly, as the release screen layer 125 for protecting the end portions 127 of the antenna wire is additionally stacked in an area corresponding to the COB receiving groove 115 on the antenna inlay layer 120, and the receiving groove 115 is processed thereafter, the release screen layer 125 located under the residual layer may prevent cutting of the wire that may occur in the antenna connection process due to the adhesiveness of wood sheet residual substances.

Then, the electrical connection may be made in an implementation method of connecting the end portions 127 of the antenna wire, which are pulled up through the residual layer on the bottom of the receiving groove 115 of the wood sheet layer 110 and the release screen layer 125, and the contact points 210 of the COB chip 200 by spot welding.

Meanwhile, the core layer 170 may be a synthetic resin material and support the overall card shape and body, and may be a transparent material such as PVC and project the texture of the wood sheet layer 110 toward the top. In addition, according to an embodiment of the present invention, the core layer 170 may be formed of an eco-friendly material having heat resistance, transparency, and chemical resistance while preventing environmental pollution. For example, the inlay core sheet may be formed of a bio-synthetic copolyester material free of bisphenol-A, and this may reduce generation of carbon dioxide more than conventional plastic materials.

In addition, the first printing layer 130 and the second printing layer 140 are sheets that print and display information of the card, or print and display information on the card or images such as the pattern or design of the card, and may be attached on the front and rear sides of the card.

In addition, the first overlay layer 150 and the second overlay layer 160 may be coating layers of a synthetic resin material for coating the top and the bottom of the wooden card to protect, and particularly, a magnetic strip is further included in the second overlay layer 160 and used for payment of merchandise by a magnetic card.

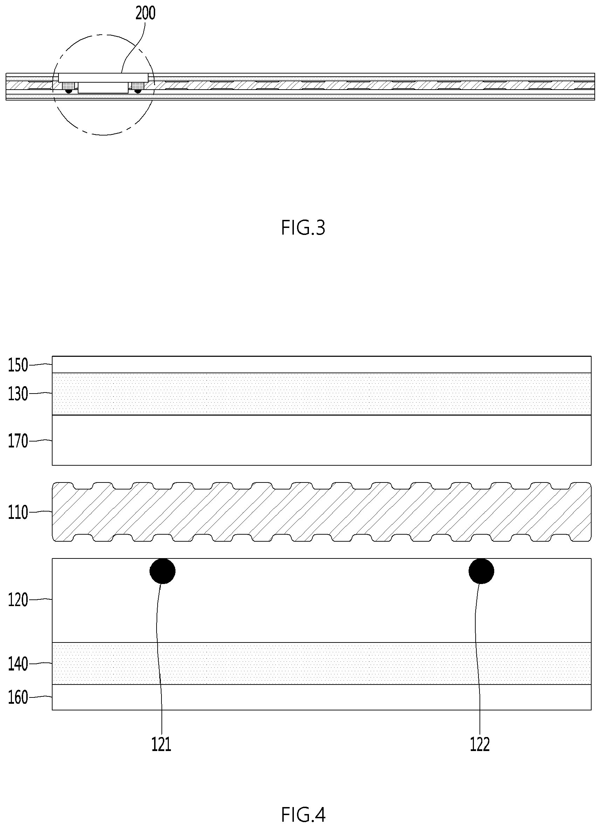

FIG. 3 is a cross-sectional view showing a wooden card manufactured according to an embodiment of the present invention, and FIGS. 4 to 8 are enlarged views showing the portion of dotted line in FIG. 3, which are cross-sectional views of each process illustrating a method of manufacturing a wooden card according to an embodiment of the present invention.

First, FIG. 3 shows a state of mounting the COB chip 200 on the receiving groove 115 of the wooden card 100 processed to form a card body through laminating after all the sheets 110, 120, 130, 140, 150, 160 and 170 are stacked.

The card body may be implemented as a plate through a process of laminating by heat and pressure, and in this state, the receiving groove 115 including a residual layer may be formed through a CNC milling process, and the COB chip 200 may be mounted after the contact points 210 of the COB chip 200 are electrically connected to the antenna wire of the antenna inlay layer 120 by spot welding through the residual layer of the receiving groove 115.

More specifically, referring to FIG. 4 first, after the wood sheet layer 110 having a wood pattern is processed and the antenna inlay layer 120 is formed, the antenna inlay layer 120 may be stacked under the wood sheet layer 110, and the core layer 170, the first printing layer 130, and the first overlay layer 150 may be sequentially stacked on the wood sheet layer 110, and the second printing layer 140 and the second overlay layer 160 may be sequentially stacked under the antenna inlay layer 120.

Here, the antenna inlay layer 120 may be formed in a method of stacking a coil antenna on the surface of an inlay core sheet, and both ends of the coil antenna may be located at the contact point connection units 121 and 122 to be respectively connected to the contact points 210 of the COB chip 200.

In addition, although the core layer 170 as described above and the inlay core sheet of the antenna inlay layer 120 may be a synthetic resin material such as PVC, according to an embodiment of the present invention, they may be formed of an eco-friendly material having heat resistance, transparency, and chemical resistance while preventing environmental pollution. For example, the inlay core sheet may be formed of a bio-synthetic copolyester material free of bisphenol-A, and this reduce generation of carbon dioxide more than conventional plastic materials.

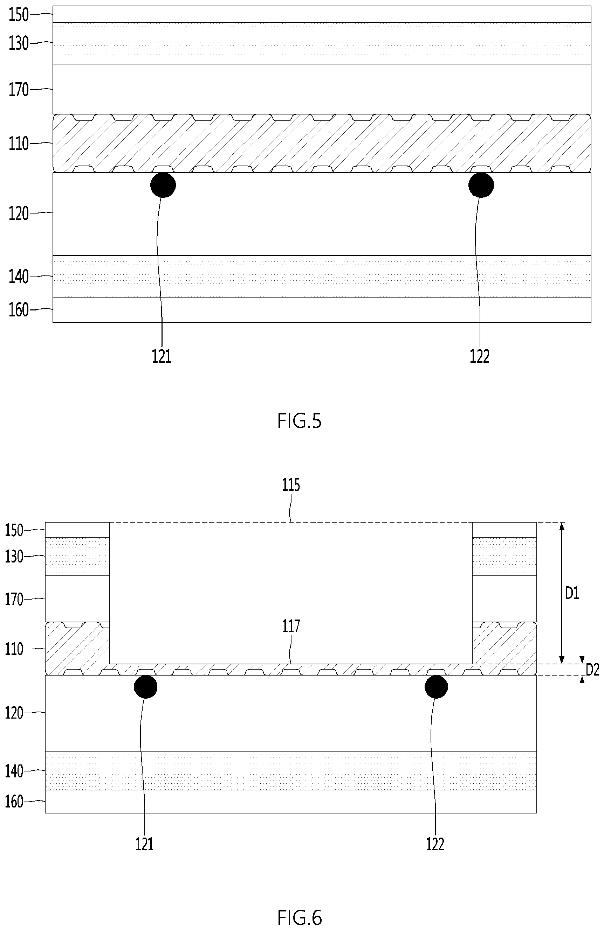

Meanwhile, referring to FIG. 5, the card body including the entire stack structure stacking all the layers 110, 120, 130, 140, 150, 160 and 170 may be formed as a plate through a process of laminating by heat and pressure.

Here, the press temperature for laminating may be changed according to the material of the core layer 170 and the antenna inlay layer 120. For example, when the cores of the core layer 170 and the antenna inlay layer 120 are made of synthetic resin such as PVC, the press temperature may be set to 150 degrees, and when the cores are made of an eco-friendly bio-synthetic copolyester material, the press temperature may be set to 115 degrees.

In addition, referring to FIG. 6, the wood sheet layer 110 is cut to depth D1 in correspondence to the COB chip receiving groove 115 according to an embodiment of the present invention, and the wood sheet layer 110 may be cut to remain a residual layer 117 of depth D2 smaller than D1. By this primary milling process like this, a concave receiving groove 115 may be primarily formed to have a width corresponding to the pad width of the COB chip 200 and a depth formed by adding the first overlay layer 150, the first printing layer 130 and D1. Here, the depth from the top of the primarily milled receiving groove 115 may be preferably 0.330 to 0.350mm corresponding to the pad portion of the COB chip 200.

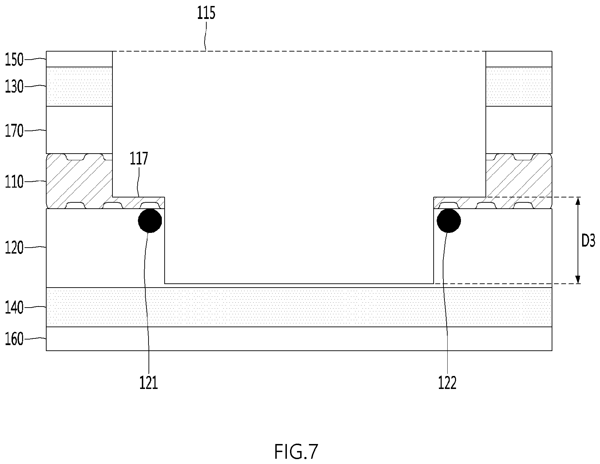

In addition, referring to FIG. 7, secondary milling corresponding to the width of the mold layer 220 may be performed on the COB chip receiving groove 115 according to an embodiment of the present invention, to accommodate the mold layer 220 on the rear side of the COB chip 200. Accordingly, a mold layer 220 receiving unit of depth D3 from the residual layer 117 to a portion of the antenna inlay layer 120 may be formed in the COB chip receiving groove 115. Here, the depth of the mold layer 220 receiving unit secondarily milled in the COB chip receiving groove 115 may be 0.550 to 0.570mm from the top, and accordingly, depth D3 may be preferably 0.220mm. However, this is an example, and the shape of the receiving groove 115 may be variously changed according to the existence, size, shape, and form of the mold layer 220 on the rear side of the COB. For example, while the upper first overlay layer 150 of 0.04mm, the upper first print layer 160 of 0.10mm, the core layer 170 of 0.12mm, the wood sheet layer 110 of 0.14mm, the antenna inlay layer 120 of 0.20mm, the lower second printing layer of 0.10mm, and the lower second overlay layer 160 of 0.06mm are sequentially stacked, preferably, the primarily milled depth D1 may be set to 0.33 to 0.35mm, the depth of the residual layer 117 may be set to 0.02 to 0.03mm, and the secondarily milled depth D3 may be set to 0.220 mm.

The depth of the residual layer 117 may be smaller than the thickness of the entire wood sheet layer 110, and a fiber layer as thin as only to cover the protrusions formed due to the wood grain or the like of the wood sheet layer 110 may configure the residual layer 117.

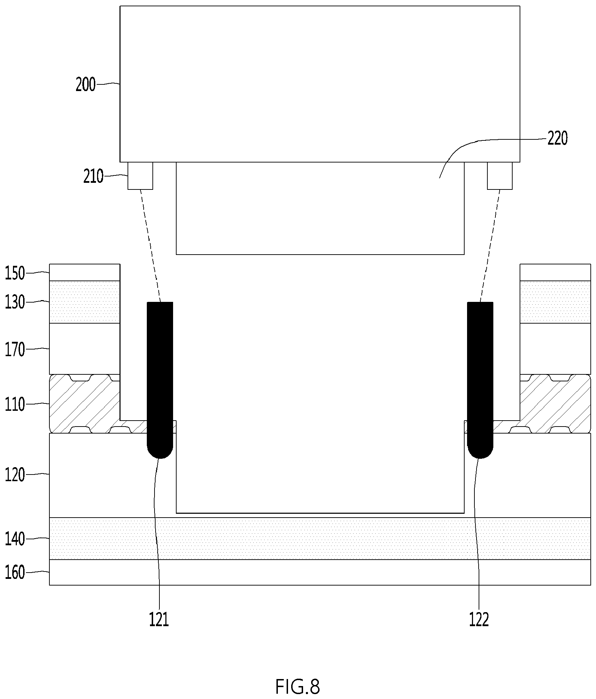

Accordingly, as shown in FIG. 8, the antenna coil pulled up from the contact points 121 and 122 of both ends of the coil antenna toward the top may be connected to the contact points 210 of the COB chip 200.

More specifically, since the residual layer 117 inside the milled receiving groove 115 is made of a thin wood fiber, the shape and position of the end portions 127 of the antenna coil located under the residual layer 117 are visually or optically exposed seeing from the top surface.

Accordingly, when the visually or optically exposed end portions 127 of the antenna coil are found and pulled up from the top of the residual layer 117, the antenna coil penetrates the residual layer 117 and is exposed to the outside, and contacts the contact points 210 of the COB chip 200 by spot welding, and accordingly, the electrically connected COB chip 200 may be mounted and fixed in the receiving groove 115 of the wood sheet layer 110.

When the COB chip 200 is mounted, the mold layer 220 on the rear side of the COB may also be accommodated by the secondarily milled receiving unit of the receiving groove 115, and at this time, the COB chip 200 may be fixed by applying an adhesive to the area where the mold layer 220 on the rear side of the COB chip 200 meets the receiving groove 115.

As an embodiment, the process of inserting the COB chip 200 may be performed after the printing and coating process on the front side of the card is completed. Although a case of a square-shape receiving groove 115 is shown in the drawing, it is not limited thereto, and the receiving groove 115 may be manufactured through a milling process in correspondence to the shape of the mold layer constituting the protrusions on the rear side of the COB and to minimize the space other than a space required for antenna connection.

In addition, although it is shown in the drawings to be thicker than the actual layers to describe each sheet, the actual sheets may be very thin.

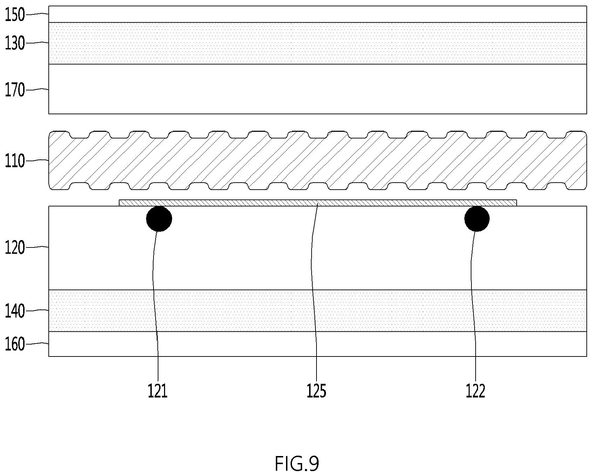

FIGS. 9 to 14 are cross-sectional views of each process illustrating a method of manufacturing a wooden card according to another embodiment of the present invention.

Referring to FIGS. 9 to 14, on the antenna contact point connection units 121 and 122 of the antenna inlay layer 120 according to an embodiment of the present invention, a release screen layer 125 for protecting the antenna contact point connection units 121 and 122 may be formed in advance before laminating.

First, as shown in FIG. 9, the release screen layer 125 may be formed in advance by applying a release screen ink. The release screen ink may be white screen ink or off-white screen ink, and may be thinly applied to allow the antenna contact point connection units 121 and 122 located under the release screen layer 125 to be visually exposed.

For example, the area of applying the release screen ink may be formed by applying the release screen ink in an area of 13mm in width and 9mm in length staring from a point spaced 8.6mm from the left and 25.6mm from the top seeing from the top with respect to the outline of the antenna inlay layer 120, and the height of the applied layer is preferably 0.015 to 0.02mm in correspondence to the residual layer 117 of the wood sheet layer 110.

The release screen layer 125 is a screen layer formed to prevent the problem of hindering the process of pulling up the antenna as the residue of solid wood generated by the residual layer 117 is adhered to or combined with the antenna and cuts the antenna wire as a result in the process of pulling up the end portions 127 of the antenna located at the contact point connection units 121 and 122 of the antenna toward the top, and the release screen layer 125 prevents adhesion between the residual layer 117 and the antenna caused by laminating by releasing and separating the antenna inlay layer 120 from the wood sheet layer 110 in the COB mounting area, and facilitates the process of pulling up the antenna by removing or penetrating the upper residual layer 117 after the laminating.

In addition, the release screen layer 125 may protect the antenna wire around the contact point connection units 121 and 122 of the antenna, and additionally prevent occurrence of the problem of pressing and cutting the antenna caused by a processing error, protrusions on the wood sheet layer 110, by-products or the like in the process of milling the residual layer 117 performed by the method described above.

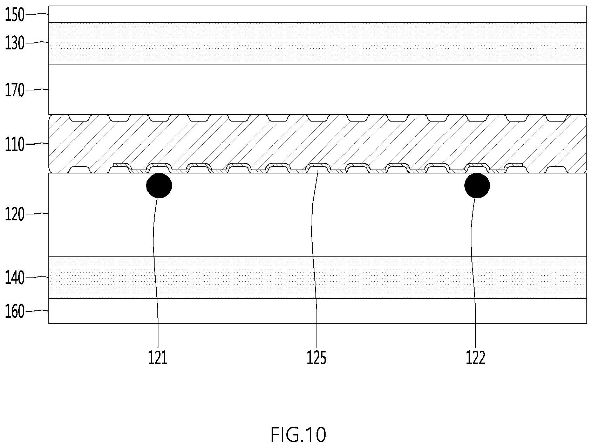

Accordingly, referring to FIG. 10, laminating by heat and pressure may be performed while the release screen layer 125 is applied and formed, and although the release screen layer 125 is modified by uneven protrusions such as wood grain of the wood sheet layer 110, as the antenna contact point connection units 121 and 122 under the release screen layer 125 are not adhered or coupled to the wood sheet residue of the residual layer 117 owing to the modified release screen layer 125, the process of penetrating, separating and pulling up the wire is facilitated, and the antenna may be protected by the elasticity and flexibility even in the process of milling and processing the receiving groove 115. Accordingly, the release screen ink layer may be formed at a predetermined thickness to easily separate the antenna contact point connection units 121 and 122 from the residual layer 117.

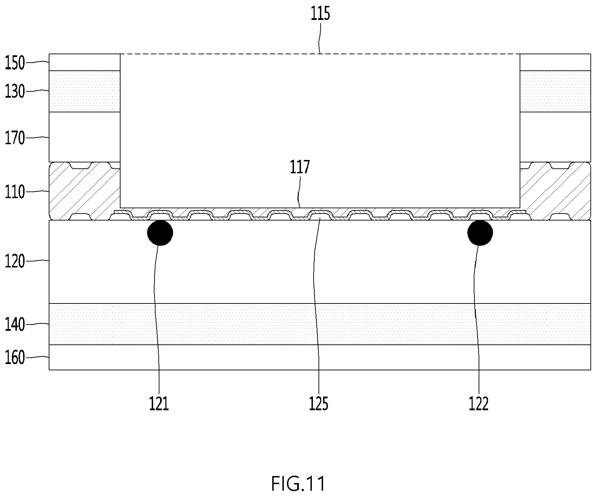

FIG. 11 shows a completed state of the primary milling process on the receiving groove 115 of the card body including the release screen layer 125, and as shown in FIG. 11, the release screen layer 125 may be left in a modified state under the residual layer 117. Accordingly, in the primary milling process, the height of the residual layer 117 may be set to be larger than the thickness of the release screen layer 125.

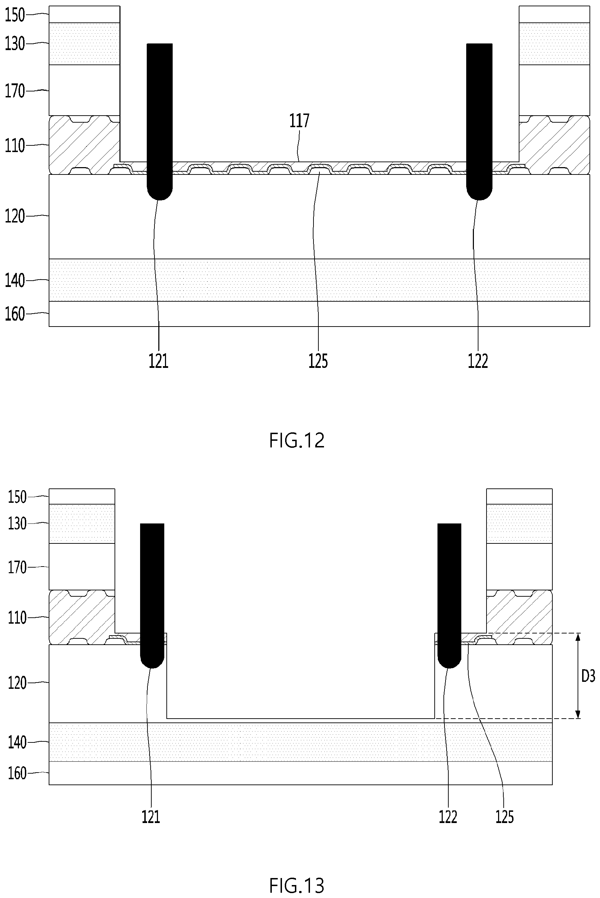

Meanwhile, FIG. 12 shows a view of pulling up the end portions of the antenna by separately penetrating the release screen ink layer 125 that is protected and modified in accordance with the shape of the residual layer 117 under the residual layer 117 according to the primary milling.

In addition, FIG. 13 shows a secondary milling process for bonding the mold layer 220 that is on the rear side of the COB chip 200, and as described above, the secondary milling process may be performed between the both end portions of the antenna in correspondence to the width of the mold layer 220 on the rear side of the COB chip 200 and to have a depth of D3.

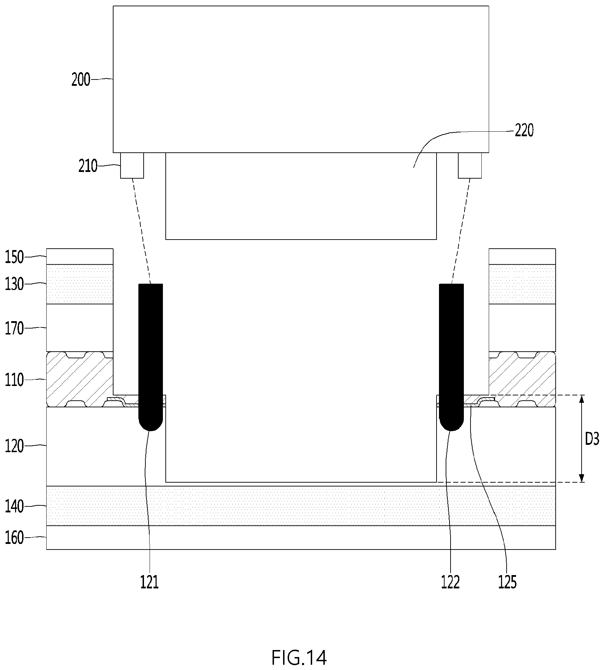

Meanwhile, FIG. 14 shows the end portions of the exposed antenna and the contact points 210 of the COB chip 200 connected by spot welding process, and after the antenna is connected, the COB chip 200 may be mounted to be in contact with the receiving unit 115.

As described above, the residue or the like of the residual layer 117 left after the spot welding due to the existence of the release screen layer 125 may be easily removed, and accordingly, more precise, productive and efficient processing of wooden cards is possible.

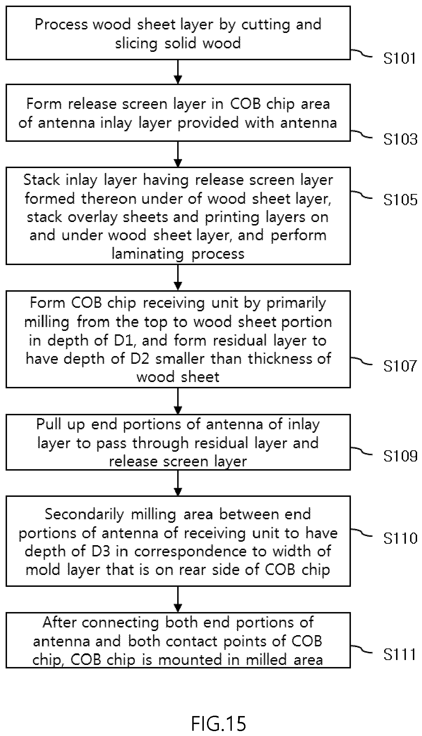

FIG. 15 is a flowchart illustrating a method of manufacturing a wooden card according to an embodiment of the present invention.

Referring to FIG. 15, a method of manufacturing a wooden card according to an embodiment of the present invention first includes a step of processing a solid wood sheet by cutting and slicing solid wood (S101).

Here, the solid wood sheet may configure the wood sheet layer 110, and a square wood bar may be processed as the solid wood sheet by drying, softening, sterilizing and re-drying as described above, and a wood pattern showing well the straight wood grain may be formed according to slice processing.

In addition, a release screen layer for protecting the antenna is formed on the contact point connection units 121 and 122 corresponding to the COB chip 200 mounting area of the antenna inlay layer 120 provided with the antenna (S103).

In addition, the antenna inlay layer 120 on which the release screen layer is formed is stacked under the solid wood sheet constituting the wood sheet layer 110, and after the core layer, the overlay sheets and the printing layers 120, 130, 150, 160 and 170 are stacked on and under the wood sheet layer 110, a laminating process is performed (S105).

When the entire body plate of the wooden card is formed according to the laminating process, in order to mount the COB chip 200, the COB chip receiving unit 115 is primarily formed by milling from the top of the body plate to the wood sheet layer 110 in a depth of D1, and the residual layer 117 is formed to have a depth of D2 smaller than the total thickness of the wood sheet layer 110.

Here, the residual layer 117 may be formed as thin as, for example, about one tenth of the total thickness of the wood sheet layer 110, and may be formed as a fiber layer provided with protrusions and depressions generated by a wood grain material.

In addition, a release screen layer 125 that is protected and modified by laminating in accordance with the uneven shape of the residual layer 117 exists under the residual layer 117.

Accordingly, the end portions 127 of the antenna of the antenna inlay layer 120 may be pulled up to pass through the residual layer 117 and the release screen layer 125 (S109).

Then, in correspondence to the width of the mold layer 220 on the rear side of the COB chip, the area between the end portions of the antenna in the receiving unit 115 may be secondarily milled in a depth of D3 (S110).

Here, step S110 is not limited to the order with respect to step S109, and step S110 may be performed before step S109. For example, the process of pulling up the end portions 127 of the antenna may be performed after performing first the secondary milling process in a depth of D3.

The end portions 127 of the antenna and the contact points 210 of the COB chip 200 may be electrically connected by spot welding.

Then, after both end portions of the antenna and both contact points of the COB chip 200 are connected, the COB chip 200 may be mounted in the area of the secondarily milled receiving groove 115 (Sill).

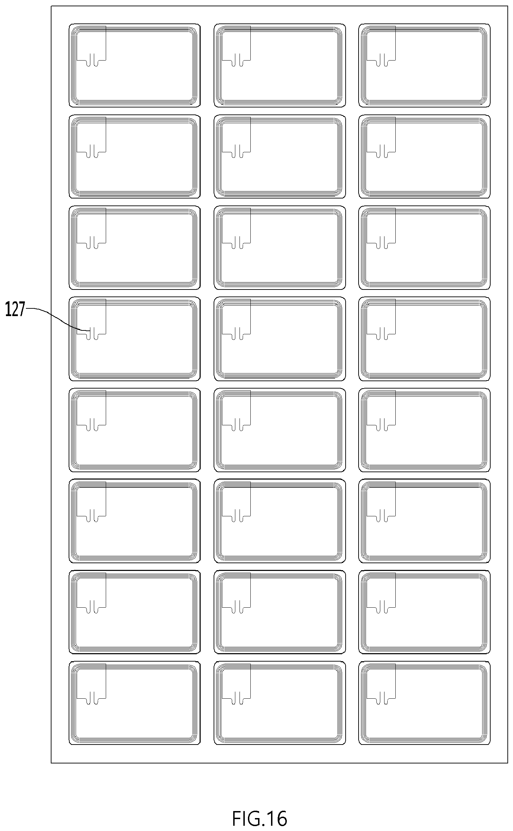

FIGS. 16 to 18 are views illustrating a process of arranging and combining card sheets in a large area sheet for manufacturing a wooden card.

Referring to FIGS. 16 to 18, the wood sheet layer 110 of the present invention may be configured as a large sheet including a plurality of cards, and after performing the laminating process of combining a plurality of sheets into one sheet by applying heat and pressure, the sheet may be divided into a plurality of cards through a cutting process. For the process of cutting the sheet including a plurality of cards, a special processing material, a coolant, and a cutting tool may be used according to the features of a wood material.

Particularly, in configuring the antenna inlay sheet as shown in FIG. 16, the number of turns of each antenna coil is determined through an RF communication sensitivity test to show an optimized sensitivity, and the antenna inlay sheet may be formed to be stacked on the core sheet thereof (PVC or eco-friendly biopoly ester material), and each of the end portions 127 may be arranged around the contact point connection units 121 and 122 for connection with the COB chip 200.

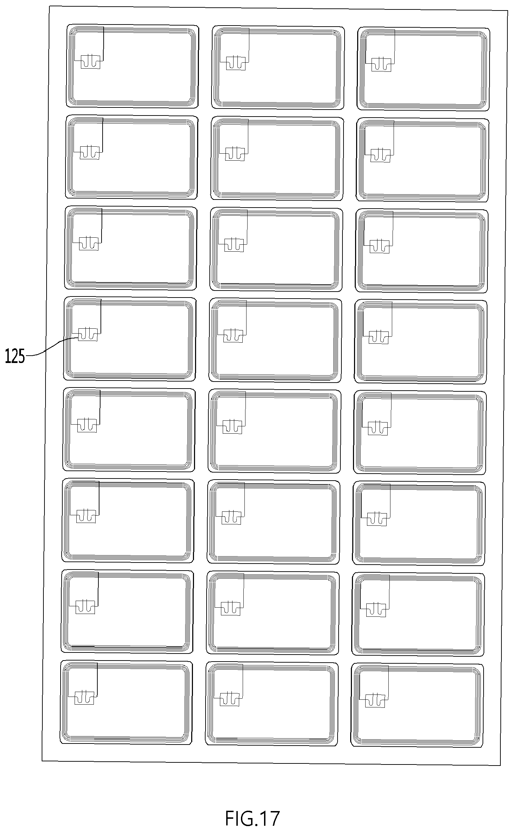

In addition, as shown in FIG. 17, a release screen layer 125 may be applied on the contact point connection units 121 and 122 of each card.

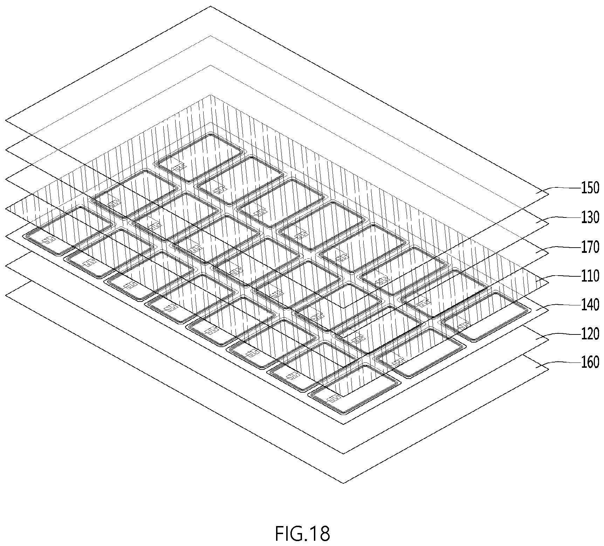

Thereafter, as shown in FIG. 18, the sheets may be combined, and may be laminated by heat and pressure and processed into card bodies.

Specifically, the laminating process may be performed by applying a predetermined pressure to the stacked sheet for a predetermined time, and cooling down while maintaining the same pressure. As an embodiment, the processing conditions such as the time, temperature, pressure and the like of the laminating process may be determined in consideration of adhesive force, thickness of the wood sheet, a degree of PVC shrinkage, materials of the core layer and inlay core sheet (bio-copolyester, etc.), and the like. For example, the laminating time and temperature may be determined in consideration of the degree of modification (contraction or relaxation) of the material during the laminating process.

Then, the large sheet implemented as one integrated sheet may be cut using a CNC machining tool or the like, and separated into individual cards. In addition, the process of milling the receiving groove 115 that forms the residual layer 117 to insert the COB chip 200 may be performed after separating the integrated sheet into individual cards, or may be performed in a combined state.

Although preferred embodiments of the present invention are shown and described above, the present invention is not limited to the specific embodiments described above, and various modified embodiments can be made by those skilled in the art without departing from the gist of the present invention claimed in the claims described below, and these modified embodiments should not be individually understood from the spirit and prospect of the present invention.

## Claims

1. A method of manufacturing a wooden card, the method comprising the steps of:
processing a wood sheet;
stacking the wood sheet on an inlay sheet including an antenna that will be connected to a COB chip;
milling an area corresponding to the chip on the wood sheet, and forming a residual layer of a thickness smaller than that of the wood sheet;
exposing end portions of the antenna passing through the residual layer from the inlay sheet located under the residual layer of the wooden sheet; and
electrically connecting the chip and the end portions of the antenna.

2. The method according to claim 1, further comprising the step of forming in advance a screen layer for protecting the end portions of the antenna in an inlay sheet area corresponding to the residual layer, and preventing adhesion or bonding to the residual layer.

3. The method according to claim 2, wherein the screen layer includes a release screen ink layer applied to the inlay sheet area.

4. The method according to claim 3, wherein the release screen ink layer is formed in a predetermined thickness to prevent adhesion to the residual layer and protect the antenna from milling of the wood sheet.

5. The method according to claim 4, wherein the release screen ink layer is formed in a thickness of 0.015 to 0.02mm.

6. The method according to claim 3, wherein the exposing step further includes the step of pulling up the end portions of the antenna to pass through the release screen ink layer that is protected and modified under the residual layer according to the milling in accordance with a shape of the residual layer.

7. The method according to claim 1, wherein the electrically connecting step includes the steps of:
pulling up the exposed end portions of the antenna; and
spot-welding the pulled end portions of the antenna and contact points of the chip.

8. The method according to claim 1, wherein a core sheet of the inlay sheet including the antenna is formed of a bio-copolyester material.

9. A wooden card comprising:
a COB (Chip on Board) chip capable of contact and non-contact communication by providing a wired or wireless interface;
a wood sheet processed from solid wood; and
an inlay sheet stacked under the wood sheet and including an antenna, wherein
a top of the wood sheet includes a chip receiving groove formed by milling an area corresponding to the chip, and the groove includes a residual layer of a thickness smaller than a thickness of the wood sheet on a bottom thereof, and end portions of the antenna passing through the residual layer from the inlay sheet located under the residual layer of the wood sheet to be exposed are electrically connected to contact points of the COB chip.

10. The card according to claim 9, wherein the inlay sheet includes a screen layer formed in advance in an inlay sheet area corresponding to the residual layer to protect the end portions of the antenna.

11. The card according to claim 11, wherein the screen layer includes a release screen ink layer applied to the inlay sheet area.

12. The card according to claim 11, wherein a core sheet of the inlay sheet including the antenna is formed of a bio-copolyester material.
